# EUROPÄISCHE PATENTANMELDUNG

(11) **EP 2 372 201 A1**
(43) Veröffentlichungstag der Anmeldung: **05.10.2011**
(21) Anmeldenummer: 11002738.0
(22) Anmeldetag: 01.04.2011
(51) Int. Cl.: F16J 15/32, F16J 15/56

(54) **Dichtring oder Abstreifer**

(30) Priorität: 01.04.2010 DE 102010013873
(71) Anmelder: Carl Freudenberg KG, 69469 Weinheim (DE)
(72) Erfinder: Wuestenhagen, Guido, Dr., 21077 Hamburg (DE); Doerksen, Sergej, 24568 Kaltenkirchen (DE); Werther, Hans, 21220 Seevetal (DE)

(57) **Zusammenfassung**

Dichtring oder Abstreifer mit einer Dicht- (1) oder Abstreiflippe (2) und zumindest einer daran angeordneten dynamisch beanspruchten Dicht- (3) oder Abstreifkante (4), die durch zwei einander durchschneidende Kegelflächen begrenzt sind, wobei die einem abzudichtenden Raum (5) zugewandte erste Kegelfläche (6) mit der gedachten Symmetrieachse (7) des Dichtrings oder Abstreifers einen ersten Kegelwinkel (8) einschließt, der größer als ein zweiter Kegelwinkel (9) ist, den die dem abzudichtenden Raum (5) abgewandte zweite Kegelfläche (10) mit der Symmetrieachse einschließt. Die Dicht- (3) oder Abstreifkante (4) weist einen Radius (11) auf, der 0,001 bis 1,5 mm beträgt, wobei der Radius (11) von der ersten (6) in die zweite Kegelfläche (10) in einen Dicht- (12) oder Abstreiflippen-Abschnitt (13) übergeht, der eine Länge (14) von 0,001 bis 3 mm aufweist und wobei der Dicht- (12) oder Abstreiflippen-Abschnitt (13) mit der Symmetrieachse (7) einen Abschnittswinkel (15) einschließt, der 1° bis 10° kleiner als der zweite Kegelwinkel (9) ist.

## Beschreibung

### Technisches Gebiet

Die Erfindung betrifft einen Dichtring oder einen Abstreifer mit einer Dicht- oder Abstreiflippe und zumindest einer daran angeordneten dynamisch beanspruchten Dicht- oder Abstreifkante, die durch zwei einander durchschneidende Kegelflächen begrenzt ist, wobei die einem abzudichtenden Raum zugewandte erste Kegelfläche mit der gedachten Symmetrieachse des Dichtrings oder Abstreifers einen ersten Kegelwinkel einschließt, der größer als ein zweiter Kegelwinkel ist, den die dem abzudichtenden Raum abgewandte zweite Kegelfläche mit der Symmetrieachse einschließt.

### Stand der Technik

Solche Dichtringe oder Abstreifer sind allgemein bekannt und gelangen zur Anwendung, um translatorisch zueinander hin- und herbewegliche Maschinenelemente gegeneinander abzudichten. Dazu kann es beispielsweise vorgesehen sein, dass der Dichtring oder der Abstreifer in der Wandung eines Gehäuses angeordnet ist, das eine relativ zum Gehäuse translatorisch hin und her bewegbare abzudichtende Stange umschließt. Der Dichtring oder der Abstreifer sind dann in einer Einbaunut des Gehäuses angeordnet und berühren die Oberfläche der translatorisch hin- und herbewegbaren Stange unter radialer elastischer Vorspannung dichtend.

Die Kegelflächen sind durch die Kegelwinkel derart zueinander angeordnet, dass das abzudichtende Medium zuverlässig innerhalb des abzudichtenden Raums zurückgehalten wird und dass bei aus dem abzudichtenden Raum ausfahrender Stange einerseits der Dichtring oder der Abstreifer ausreichend gut geschmiert wird, um eine möglichst lange Gebrauchsdauer mit möglichst gleichbleibenden Gebrauchseigenschaften zu gewährleisten und andererseits dafür zu sorgen, dass nicht unerwünscht viel abzudichtendes Medium auf der Oberfläche der Stange verbleibt und in die Umgebung gelangt. Bei einfahrender Stange verhindert der Abstreifer durch seine Abstreifwirkung, dass Verunreinigungen auf der abzustreifenden Oberfläche zusammen mit der Stange zurück in den abzudichtenden Raum gelangen.

Bei vorbekannten Dichtringen oder Abstreifern beträgt das Geschwindigkeitsverhältnis zwischen Aus- und Einfahren höchstens 1 zu 8. Eine höhere Einfahrgeschwindigkeit ist nicht zu realisieren, da lokale Effekte tragen.

Diese lokalen Effekte entstehen im Kontaktbereich der Dichtkante/Abstreifkante mit der Gegenlauffläche. Der asymmetrische Kegelwinkel der Dichtkante/Abstreifkante hat und die spitze, praktisch rundungsfreie Dichtkante/Abstreifkante führen zu einer linienförmige Berührung der Dichtkante/Abstreifkante der mit der Gegenlauffläche. Durch eine solche Ausgestaltung ist eine zuverlässige Dichtfunktion nur bis zu dem zuvor genannten Geschwindigkeitsverhältnis möglich.

### Darstellung der Erfindung

Der Erfindung liegt die Aufgabe zugrunde, einen Dichtring oder Abstreifer der eingangs genannten Art derart weiterzuentwickeln, dass gute Gebrauchseigenschaften während einer langen Gebrauchsdauer auch dann noch erreicht werden, wenn das Geschwindigkeitsverhältnis zwischen Aus- und Einfahren des abzudichtenden Maschinenelements, z.B. einer Stange, kleiner als 1 zu 8 ist.

Diese Aufgabe wird erfindungsgemäß bei einem Dichtring oder Abstreifer durch die Merkmale von Anspruch 1 gelöst. Auf vorteilhafte Ausgestaltungen nehmen die Unteransprüche Bezug.

Zur Lösung der Aufgabe ist es vorgesehen, dass die Dicht- oder Abstreifkante einen Radius aufweist, der 0,01 bis 1,5 mm beträgt, dass der Radius von der ersten in die zweite Kegelfläche in einen Dicht- oder Abstreiflippen-Abschnitt übergeht, der eine Länge von 0,01 bis 3 mm aufweist und dass der Dicht- oder Abstreiflippen-Abschnitt mit der Symmetrieachse einen Abschnittswinkel einschließt, der 1° bis 10° kleiner als der zweite Kegelwinkel ist.

Durch die Kombination der zuvor genannten Merkmale ergibt sich eine lokale Verstärkung der Dicht- oder Abstreifkante, die zur Realisierung der Dichtfunktion bei Geschwindigkeitsverhältnissen zwischen Aus- und Einfahren des abzudichtenden Maschinenelements, z.B. einer Stange führt, die deutlich kleiner als 1 zu 8 sind. Die lokale Verstärkung wird durch die erfindungsgemäße Geometrie der Dichtkante/Abstreifkante erreicht. Die Kontaktbereite der Dichtkante/Abstreifkante mit der gegen Lauffläche ist im Vergleich zum Stand der Technik vergrößert. Dadurch werden gezielt die hydrodynamischen Vorgänge im Flüssigkeitsfilm zwischen der Dichtkante/Abstreifkante der und der Gegenlauffläche beeinflusst.

Durch einen Dichtring oder Abstreifer, wie zuvor beschrieben, sind Geschwindigkeitsverhältnisse zwischen Aus- und Einfahren des Maschinenelements problemlos realisierbar, die wesentlich kleiner als 1 zu 8, zum Beispiel 1 zu 20 und kleiner sind.

Solche Geschwindigkeitsverhältnisse sind insbesondere bei Verwendungen in Spritzgießmaschinen vorteilhaft. Die Dichtringe oder Abstreifer gelangen in Hydraulikzylindern in Spritzeinheiten von Spritzgießmaschinen zur Anwendung. Insbesondere für eine derartige Verwendung sind die erfindungsmäßen Dichtringe oder Abstreifer besonders geeignet, weil sich dadurch die Taktzeiten reduzieren und der Ausstoß aus der Spritzgießmaschine entsprechend vergrößern lässt.

Der Dichtring oder der Abstreifer können die Form eines Nutrings aufweisen. Nutringe gelangen in den unterschiedlichsten Anwendungsbereichen der Hydraulik zur Anwendung. Nutringe, die aus dem Stand der Technik bekannt sind, können durch erfindungsgemäße nutringförmig ausgebildete Dichtringe oder Abstreifer problemlos ersetzt werden. Dadurch kann das zuvor beschriebene, gewünschte Geschwindigkeitsverhältnis auch bei Hydraulikzylindern erreicht werden, mit denen das bisher nicht möglich war.

Nach einer anderen Ausgestaltung besteht die Möglichkeit, dass der Dichtring oder Abstreifer zweiteilig ausgebildet ist, mit einem Anpresselement aus elastomerem Werkstoff und einem Dicht- oder Abstreifelement aus polymerem Werkstoff, wobei die Dicht- oder Abstreiflippe auf der dem Anpresselement radial abgewandten Seite des Dicht- oder Abstreifelements angeordnet ist. Auch eine solche zweiteilige Bauform ist generell aus dem Stand der Technik bekannt, wobei sich die vorteilhaften Geschwindigkeitsverhältnisse zwischen Aus- und Einfahren des translatorisch beweglichen Maschinenelements erst durch die Kombination erreichen lässt, umfassend den zuvor beschriebenen, erfindungsgemäßen Radius, den Dicht- oder Abstreiflippen-Abschnitt und den Abschnittswinkel.

### Kurzbeschreibung der Zeichnung

Zwei Ausführungsbeispiele des erfindungsgemäßen Dichtrings oder Abstreifers werden nachfolgend anhand der Fig. 1 bis 3 näher erläutert. Diese zeigen jeweils in schematischer Darstellung:
- Fig. 1: ein erstes Ausführungsbeispiel eines als Nutring ausgebildeten Dichtrings oder Abstreifers,
- Fig. 2: ein zweites, zweiteilig ausgebildetes Ausführungsbeispiel, das als Kompaktdichtung ausgebildet ist,
- Fig. 3: einen vergrößerten Ausschnitt aus der Dicht- oder Abstreifkante aus den Fig. 1 und 2.

### Ausführung der Erfindung

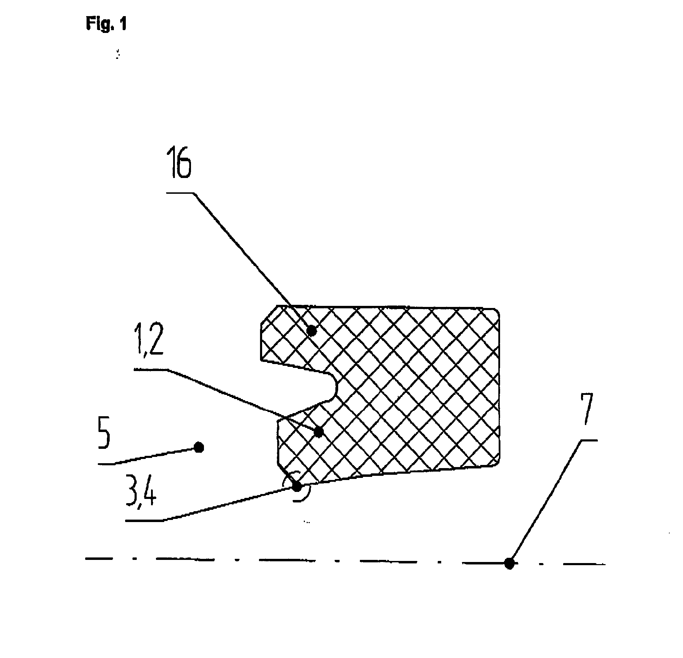

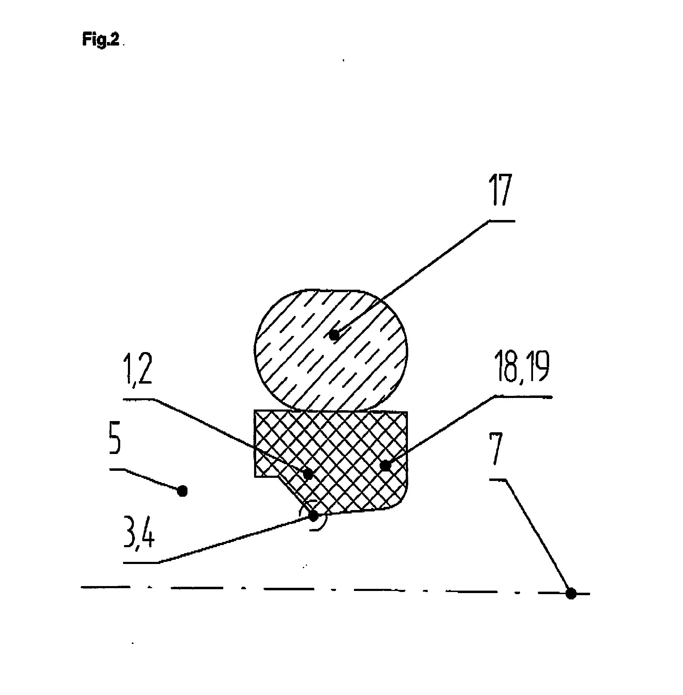

Die Dichtringe oder Abstreifer aus den Fig. 1 und 2 können beispielsweise in einem Hydraulikzylinder in Spritzeinheiten von Spritzgießmaschinen zur Anwendung gelangen.

Der Dichtring oder Abstreifer umfasst eine Dicht- 1 oder Abstreiflippe 2, wobei an der Dicht-1 oder Abstreiflippe 2 eine dynamisch beanspruchte Dicht- 3 oder Abstreifkante 4 angeordnet ist. Die Dicht- 3 oder Abstreifkante 4 ist durch zwei einander durchschneidende Kegelflächen 6, 10 begrenzt, und die erste Kegelfläche 6, die dem abzudichtenden Raum 5 axial zugewandt ist, schließt mit der gedachten Symmetrieachse 7 einen ersten Kegelwinkel 8 ein, der größer als der zweite Kegelwinkel 9 ist, den die dem abzudichtenden Raum 5 axial abgewandte zweite Kegelfläche 10 mit der Symmetrieachse 7 einschließt. Die hier dargestellten Maschinenelemente weisen gute

Gebrauchseigenschaften hinsichtlich der Abdichtung und dem Abstreifen vom abzudichtenden Medium während einer langen Gebrauchsdauer auch dann auf, wenn das Geschwindigkeitsverhältnis zwischen Aus- und Einfahren einer abzudichtenden, hier nicht dargestellten Stange deutlich kleiner als 1 zu 8, zum Beispiel 1 zu 20, ist. Diese kleinen Geschwindigkeitsverhältnisse können durch die spezielle Ausgestaltung der Dicht- 3 oder Abstreifkante 4 erreicht werden.
Fig. 1 zeigt einen Nutring 16.
Fig. 2 zeigt eine Kompaktdichtung mit einem Anpresselement 17 und einem Dicht-18 oder Abstreifelement 19.

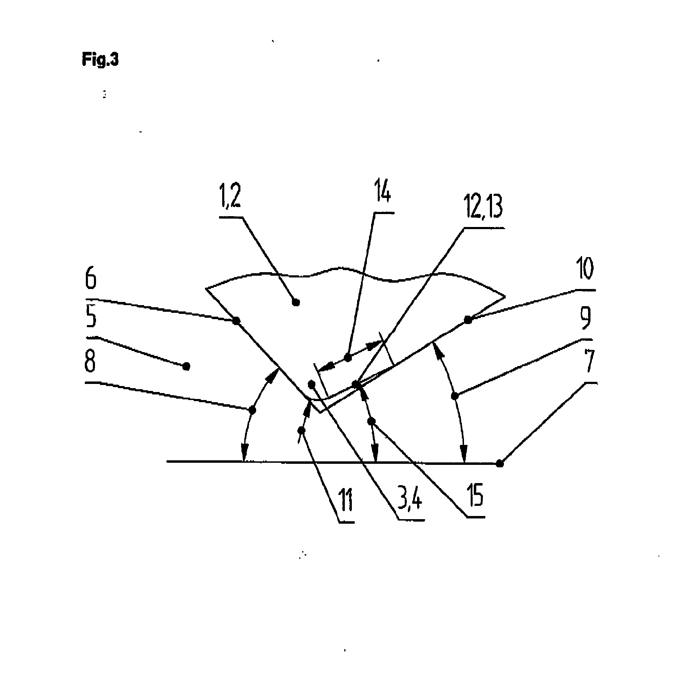

In Fig. 3 ist die Dicht- 3 oder Abstreifkante 4 aus den Fig. 1 und 2 in vergrößerter Darstellung gezeigt. Der Radius 11 im Übergangsbereich von der ersten Kegelfläche 6 zum Dicht-oder Abstreiflippen-Abschnitt 12, 13 beträgt 0,01 bis 1,5 mm. Der Dicht-12 oder Abstreiflippen-Abschnitt 13 weist eine Länge 14 von 0,01 bis 3 mm auf. Der Abschnittswinkel 15, den der Dicht-12 oder Abstreiflippen-Abschnitt 13 mit der Symmetrieachse 7 einschließt, ist 1° bis 10° kleiner als der zweite Kegelwinkel 9.

Durch die genannten Merkmale ist die Dicht- 1 und Abstreiflippe 2 vergleichsweise steif und auch dann formbeständig, wenn Geschwindigkeitsverhältnisse zwischen Aus- und Einfahren eines abzudichtenden Maschinenelements bei Betrieb von Hydraulikzylindern, zum Beispiel in Spritzeinheiten von Spritzgießmaschinen, herrschen, die 1 zu 20 und kleiner sind.

## Patentansprüche

1. Dichtring oder Abstreifer mit einer Dicht- (1) oder Abstreiflippe (2) und zumindest einer daran angeordneten dynamisch beanspruchten Dicht-(3) oder Abstreifkante (4), die durch zwei einander durchschneidende Kegelflächen begrenzt sind, wobei die einem abzudichtenden Raum (5) zugewandte erste Kegelfläche (6) mit der gedachten Symmetrieachse (7) des Dichtrings oder Abstreifers einen ersten Kegelwinkel (8) einschließt, der größer als ein zweiter Kegelwinkel (9) ist, den die dem abzudichtenden Raum (5) abgewandte zweite Kegelfläche (10) mit der Symmetrieachse einschließt, **dadurch gekennzeichnet, dass** die Dicht-(3) oder Abstreifkante (4) einen Radius (11) aufweist, der 0,01 bis 1,5 mm beträgt, dass der Radius (11) von der ersten (6) in die zweite Kegelfläche (10) in einen Dicht- (12) oder Abstreiflippen-Abschnitt (13) übergeht, der eine Länge (14) von 0,01 bis 3 mm aufweist und dass der Dicht-(12) oder Abstreiflippen-Abschnitt (13) mit der Symmetrieachse (7) einen Abschnittswinkel (15) einschließt, der 1° bis 10° kleiner als der zweite Kegelwinkel (9) ist.

2. Dichtring oder Abstreifer nach Anspruch 1, **dadurch gekennzeichnet, dass** der Dichtring oder Abstreifer die Form eines Nutrings (16) aufweist.

3. Dichtring oder Abstreifer nach Anspruch 1, **dadurch gekennzeichnet, dass** der Dichtring oder Abstreifer zweiteilig ausgebildet ist, mit einem Anpresselement (17) aus elastomerem Werkstoff und einem Dicht- (18) oder Abstreifelement (19) aus polymerem Werkstoff, wobei die Dicht- (1) oder Abstreiflippe (2) auf der dem Anpresselement (17) radial abgewandten Seite des Dicht- (18) oder Abstreifelements (19) angeordnet ist.
